# FASCICULE DE BREVET EUROPEEN

(11) **EP 2 777 456 B1**
(45) Date de publication et mention de la délivrance du brevet: **07.10.2015**
(21) Numéro de dépôt: 13158594.5
(22) Date de dépôt: 11.03.2013
(51) Int. Cl.: A47J 45/06

(54) **Récipient de cuisson muni d'une poignée présentant une partie de préhension à temperature réduite**
Kochbehälter, der mit einem Griff ausgestattet ist, der einen Griffteil mit reduzierter Temperatur umfasst
Cooking vessel provided with a handle having a low-temperature gripping portion

(43) Date de publication de la demande: 17.09.2014
(73) Titulaire: LAGOSTINA S.p.A., 28887 Omegna, Verbania (IT)
(72) Inventeur: Fodrini, Maurizio, 28805 Vogogna (IT)
(74) Mandataire: Bourrières, Patrice

(56) Documents cités:
- DE-A1- 3 400 005
- DE-A1- 19 608 741
- DE-U1- 9 420 672
- DE-U1- 29 603 095
- FR-A- 1 062 774
- FR-A- 1 081 482
- GB-A- 2 351 652

## Description

La présente invention concerne un récipient de cuisson destiné à la cuisson d'aliments comportant une paroi s'étendant verticalement et une poignée fixée sur la paroi, notamment une poêle, une casserole, une sauteuse, un faitout ou un autocuiseur. Un tel récipient de cuisson est destiné à être posé sur une source de chauffe notamment une plaque électrique, un réchaud à gaz, une plaque à induction.

Certains récipients de cuisson connus comportent une poignée comprenant une partie de fixation, fixée à une paroi prolongée par une partie de préhension qui s'étend radialement à la paroi. La poignée peut prendre la forme d'un manche pour une manipulation à une main ou d'une anse pour une manipulation à deux mains.

Lorsqu'un tel récipient de cuisson est utilisé, la paroi s'échauffe et par conduction échauffe la partie de fixation de la poignée puis la partie de préhension. La partie de fixation étant en général assez courte, la partie de préhension peut donc présenter une température élevée au voisinage de la partie de fixation. Ainsi, un utilisateur qui saisit la partie de préhension proche de la partie de fixation risque de se brûler. Pour un tel récipient de cuisson, l'utilisation de gants est recommandée. Le document DE-A1-3 400 500 montre un exemple d'un tel récipient de cuisson.

Dans certains cas, notamment lorsqu'un tel récipient de cuisson est utilisé sur une source de chauffe du type réchaud à gaz, la partie de fixation et la partie de préhension peuvent être chauffées également par rayonnement direct de la flamme, ce qui est particulièrement le cas lorsque la poignée est une anse dont la partie de fixation est courte et la partie de préhension est proche de la paroi.

La partie de fixation de la poignée de ces récipients de cuisson connus comporte une surface venant au contact de la paroi du récipient et qui présente une courbure dont le rayon est adapté au rayon de courbure de la paroi. Ainsi chaque poignée est spécifique pour une géométrie de récipient de cuisson. Par exemple, pour une batterie de quatre casseroles de diamètres différents, il faut concevoir et fabriquer quatre poignées différentes. En conséquence, les couts d'investissements, de fabrication et de stockage de tels récipients de cuisson sont élevés.

Le but de la présente invention est de remédier aux inconvénients précités et de proposer un récipient de cuisson présentant une ergonomie optimisée pour permettre à l'utilisateur de le manipuler en toute sécurité, notamment au niveau de la température de la partie de préhension.

Un autre but de l'invention est de proposer un récipient de cuisson, en particulier la poignée, qui soit de conception simple et économique à mettre en oeuvre.

Ces buts sont atteints avec un récipient de cuisson selon la revendication 1.

La partie de préhension s'étend vers le bas à partir de la partie de fixation. La partie de fixation est donc agencée dans une partie haute de la paroi et est ainsi le plus éloignée possible de la source de chauffe pour limiter le flux thermique par conduction et par conséquent la température de la partie de préhension de la poignée.

Dans une manipulation préférée du récipient de cuisson, l'utilisateur place la paume de sa main sur une portion de la partie de préhension la plus éloignée de la paroi correspondant à une portion courbe, sensiblement verticale, de la boucle et place les doigts sur une portion finale de la partie de préhension correspondant à l'extrémité libre de la boucle ouverte. Le fait que la poignée s'étende davantage radialement à la paroi que verticalement permet d'allonger le chemin thermique que doit parcourir la chaleur entre la source de chauffe et les zones de contact de la main sur la poignée, en particulier la zone de contact des doigts sur la portion finale de la partie de préhension. Ainsi, la température de la partie de préhension de la poignée se trouve réduite, en particulier l'extrémité libre de la boucle ouverte.

De plus, le fait que la partie de préhension présente une forme de boucle ouverte, agencée verticalement par rapport au récipient et courbée vers le bas permet d'obtenir une poignée compacte et un récipient de cuisson facile à ranger.

La partie de fixation de la poignée est courbée vers le haut et s'étend le long de la paroi. Cette disposition permet d'éloigner au maximum la partie de fixation de la source de chauffe pour limiter le flux thermique par conduction et allonger le chemin thermique vers la partie de préhension et ainsi réduire au maximum la température de la partie de préhension de la poignée.

De préférence, la poignée présente une section sensiblement constante.

Cette disposition permet de réaliser une poignée mise en forme à partir d'un barreau extrudé de matière première. Ainsi, le procédé de fabrication d'une telle poignée est particulièrement économique.

Avantageusement, la poignée est réalisée en un matériau métallique, notamment un acier inoxydable.

Cette disposition permet de réaliser une poignée résistante, notamment aux agressions thermiques et durable dans le temps.

De plus, l'acier inoxydable présente une conductivité thermique faible (par exemple deux fois plus faible qu'un acier doux) qui permet de ralentir le flux thermique vers la partie de préhension.

De préférence, la poignée présente une section de forme semi circulaire.

Cette disposition permet notamment de faciliter la mise en forme et le polissage dans le cas ou la poignée est réalisée en acier inoxydable.

Avantageusement, la section présente une largeur comprise entre 5 et 20 millimètres, de préférences 12 millimètres.

Cette disposition permet d'obtenir une poignée mettant en oeuvre peu de matière et donc très économique.

De préférence, la poignée présente une extension radiale par rapport à la paroi de longueur L et la partie de préhension présente une hauteur H, le rapport entre la hauteur H et la longueur L étant comprise entre 0,3 et 0,7, de préférence 0,5.

Ce rapport permet de définir une poignée dont la partie de préhension présente une hauteur suffisante pour une bonne prise en main et qui est suffisamment éloignée de la paroi pour ne pas trop s'échauffer.

Avantageusement, la partie de préhension comprend une portion courbe qui comporte une face externe présentant un rayon de courbure compris entre 12 et 25 millimètres, de préférence 16 millimètres.

Cette disposition permet d'obtenir une poignée dont la face externe de la partie de préhension est adaptée à la taille de la paume d'une main.

De préférence, la partie de fixation comporte une surface de fixation agencée contre la paroi, ladite surface de fixation étant plane ou présentant une courbure dont le rayon est supérieur à 150 millimètres.

Cette disposition permet à une même poignée d'être fixée sur plusieurs récipients de cuisson de rayons différents. En d'autres termes, on peut réaliser plusieurs références de récipients de cuisson à partir d'une référence de poignée. Cette disposition permet d'obtenir une ligne de contact verticale entre la surface de fixation de la poignée et la paroi du récipient de cuisson qui autorise notamment une fixation par soudure. La largeur de la section de la poignée étant faible, on obtient un accostage poignée/paroi relativement esthétique.

Avantageusement, le récipient de cuisson comporte au moins deux poignées agencées côte à côte pour définir un espace permettant la circulation de l'air.

Cette disposition permet d'obtenir une poignée dont la partie de préhension est massive pour permettre une bonne prise en main à partir d'au moins deux poignées élémentaires, identiques. Plus le diamètre du récipient de cuisson sera important, plus le nombre de poignées élémentaires agencées côte à côte peut être important. Ainsi, on peut réaliser une poignée ergonomique pour un récipient de grande dimension à partir de plusieurs poignées élémentaires de section réduite.

De plus, l'espace permettant la circulation de l'air entre les deux poignées permet de favoriser le refroidissement de la partie de préhension et ainsi faire baisser sa température.

Une seule référence de poignée élémentaire permettant de réaliser plusieurs références de récipients de cuisson est une solution particulièrement économique au niveau industriel, notamment au niveau des investissements et des stocks.

De préférence, l'espace au niveau de la partie de fixation est compris entre 1 et 10 millimètres, de préférence 7 millimètres.

Cette disposition permet d'obtenir un refroidissement optimum de la partie de préhension de la poignée formée d'au moins deux poignées élémentaires.

Dans le cas d'un récipient de cuisson de diamètre important comportant plusieurs poignées agencées côte à côte, l'espace e prendra une valeur faible proche de 1 millimètre.

On comprendra mieux les buts, aspects et avantages de la présente invention d'après la description donnée ci-après des modes particuliers de réalisation de l'invention présentés à titre d'exemples non limitatifs, en se référant aux dessins annexés dans lesquels :
- la figure 1 est une vue d'ensemble d'un récipient de cuisson muni de deux poignées agencées de part et d'autre du récipient de cuisson selon un mode particulier de réalisation de l'invention,
- la figure 2 est une vue d'une poignée de la figure 1,
- la figure 3a est une vue en coupe suivant le plan de coupe IIIa de la poignée de la figure 2,
- la figure 3b est une vue en coupe suivant le plan de coupe IIIb de la poignée de la figure 2,
- la figure 4 est une vue en perspective d'un récipient de cuisson muni de deux dispositifs de préhension, chaque dispositif de préhension étant formé par deux poignées de la figure 2, agencées côte à côte sur la paroi du récipient de cuisson,
- la figure 5 est une vue en perspective d'un récipient de cuisson muni de deux dispositifs de préhension, chaque dispositif de préhension étant formé par quatre poignées de la figure 2, agencées côte à côte sur la paroi du récipient de cuisson,
- la figure 6 est une vue du dessus de trois récipients de cuisson de forme circulaire et de rayons croissants, chaque récipient de cuisson comportant un dispositif de préhension formés par plusieurs poignées agencées côte à côte en fonction de leur rayon,
- la figure 7 est une vue de détail d'un récipient de cuisson muni d'une poignée selon un autre mode de réalisation de l'invention.

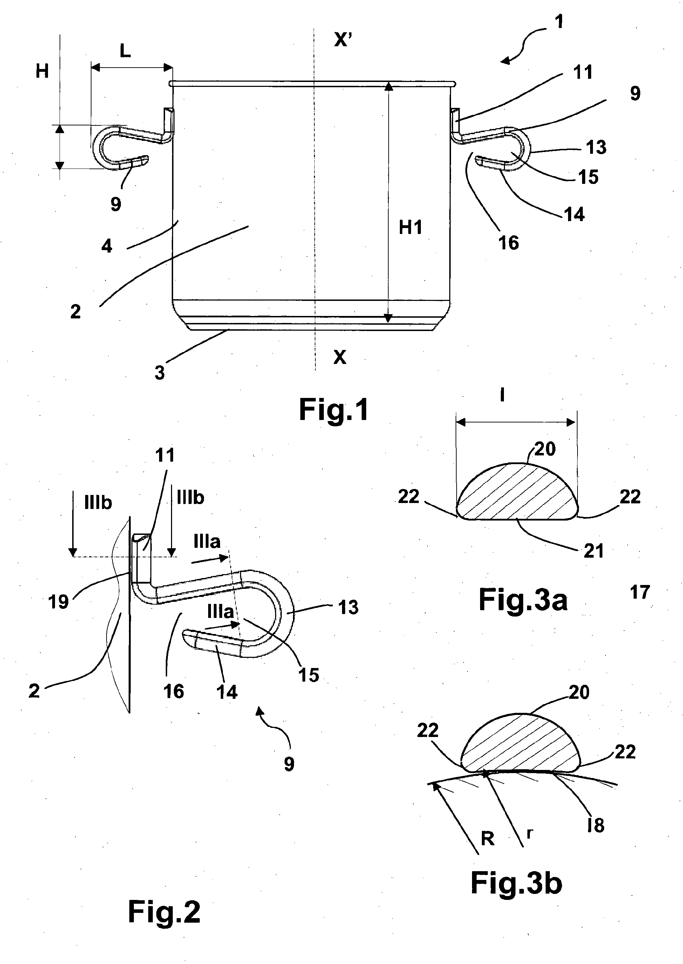

La figure 1 illustre un récipient de cuisson 1 conforme à l'invention qui est destiné à assurer la cuisson de différents aliments, de préférence dans un contexte domestique, étant entendu que l'invention peut également concerner des appareils professionnels ou semi-professionnels. Le récipient de cuisson 1 conforme à l'invention présente un caractère portatif (c'est-à-dire qu'il peut être déplacé manuellement). De façon classique, le récipient de cuisson 1 conforme à l'invention est conçu pour assurer la cuisson de différents aliments sous l'effet d'une source de chauffe externe.

De façon classique, le récipient de cuisson 1 comprend une cuve 2 comportant un fond 3 et une paroi 4 latérale. La cuve 2 présente avantageusement une symétrie de révolution selon un axe X-X'. Par la suite, la direction de cet axe de symétrie X-X' sera considérée comme la direction verticale lorsque le récipient de cuisson 1 est en fonctionnement normal, c'est-à-dire repose sur un plan horizontal. Ainsi, la paroi 4 s'étend à partir du fond selon la direction verticale ou verticalement. La paroi 4 est sensiblement cylindrique et présente un rayon de courbure R.

Le récipient de cuisson 1 illustré à la figure 1 comporte deux poignées 9 agencées de manière diamétralement opposées sur la cuve 2. Chaque poignée 9 est fixée sur la paroi 4 de façon à être éloignée au maximum du fond 3. La paroi 4 présente une hauteur H1 et la poignée 9 est avantageusement fixée dans le quart supérieur de la hauteur H1.

La poignée 9, illustrée à la figure 2, comporte une partie de fixation 11 prolongée par une partie de préhension 13, 14 qui présente une forme de boucle ouverte, agencée verticalement par rapport au récipient de cuisson 1 et courbée vers le bas. La partie de fixation 11 est courbée vers le haut et s'étend verticalement le long de la paroi 4. La partie de préhension comporte une portion courbe 13 et une portion finale 14. La boucle ouverte formant la partie de préhension délimite dans un plan vertical une cavité 15 qui présente une ouverture 16 orientée vers la paroi 4.

La poignée 9 présente sur sa longueur une section sensiblement constante (Fig.3a). La poignée 9 est avantageusement réalisée à partir d'un barreau extrudé de matière première. La matière première est de préférence un acier inoxydable standard du type AISI 304 suivant la norme américaine. La section de la poignée 9 présente une forme semi circulaire. La forme semi circulaire présente une partie circulaire 20 et une partie plate 21. Les jonctions entre la partie circulaire 20 et la partie plate 21 comportent des rayons de raccordement 22 pour éviter de présenter des zones anguleuses.

La partie de fixation 11 courbée vers le haut comporte une surface de fixation 18 agencée contre la paroi 4 (Fig.3b). La surface de fixation 18 peut être plane ou présenter une courbure dont le rayon r est supérieur à 150 millimètres correspondant au rayon maxi des récipients de cuisson. La section de la poignée présente une largeur I comprise entre 5 et 20 millimètres, de préférences 12 millimètres. Avec une seule référence de poignée 9, on pourra réaliser plusieurs références de récipients de cuisson à partir de cuves de rayon différents.

La partie de fixation 11 de la poignée 9 peut être fixée sur la paroi 4 par une opération de soudure. D'autres modes de fixation peuvent être envisagés, par exemple par une opération de rivetage.

En utilisation, l'utilisateur qui veut déplacer le récipient de cuisson 1 place la paume de chacune de ses mains sur les portions courbes 13 des parties de préhension et place les doigts de chaque main sur les portions finales 14 des parties de préhension. L'utilisateur peut ensuite soulever facilement le récipient de cuisson 1.

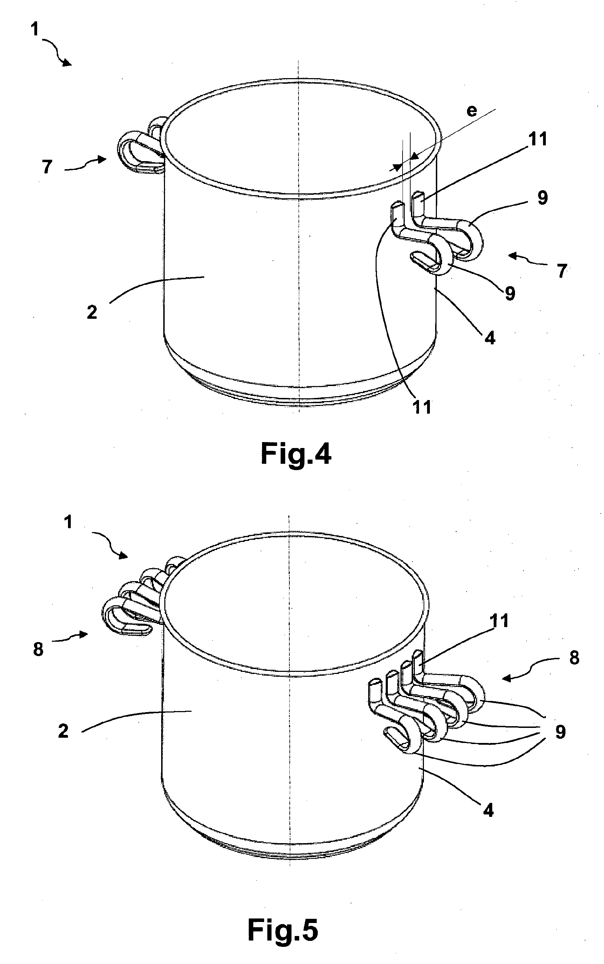

La figure 4 illustre le récipient de cuisson 1 comportant deux dispositifs de préhension 7 agencées de manière diamétralement opposées sur la cuve 2. Chaque dispositif de préhension 7 comprend deux poignées 9 agencées côte à côte. Les deux parties de préhension permettent à l'utilisateur de saisir facilement le récipient de cuisson pour le manipuler. Les deux poignées 9 sont fixées à la paroi 4 par leur partie de fixation 11 respective, un espace e étant ménagé entre les deux parties de fixation 11. On obtient ainsi un espace entre les deux poignées 9 qui permet une circulation de l'air favorisant le refroidissement des parties de préhension des poignées 9.

Selon un mode de réalisation visible à la figure 5, le récipient de cuisson 1 comporte deux dispositifs de préhension 8 agencés de manière diamétralement opposés sur la cuve 2. Chaque dispositif de préhension comprend quatre poignées 9 agencées côte à côte.

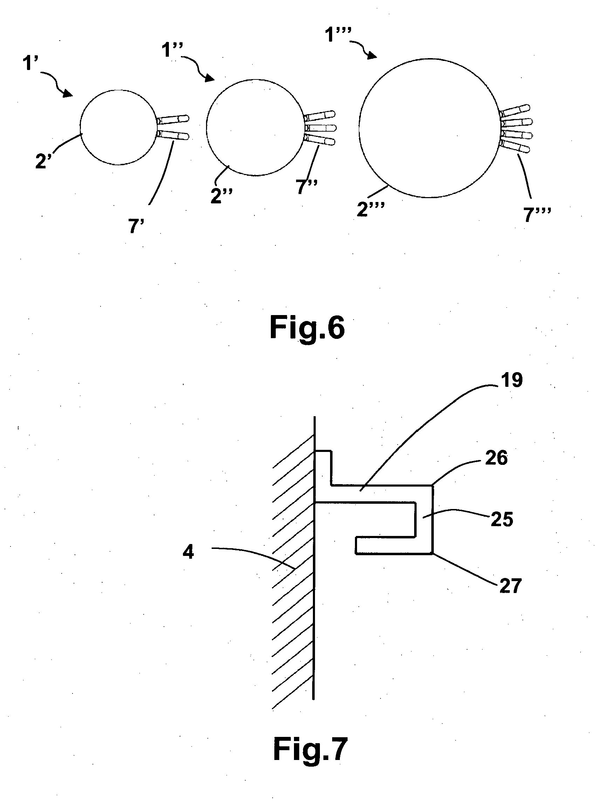

On peut donc réaliser à partir d'une poignée 9 élémentaire plusieurs dispositifs de préhension adaptés à la taille de la cuve 2. Ce principe est illustré à la figure 6. Les dispositifs de préhension 7', 7" et 7"' sont formés respectivement de deux, trois et quatre poignées 9 pour s'adapter respectivement à des tailles de cuves 2', 2" et 2"' de diamètres croissants et former trois récipients de cuisson 1' 1" et 1"'.

La figure 7 illustre une variante de réalisation d'une poignée 19 fixée sur la paroi 4. La poignée 19 comporte une partie de préhension 25 qui présente une forme de boucle ouverte dont le profil est anguleux. La partie de préhension 25 comporte deux arêtes 26, 27.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, la section de la poignée peut être rectangulaire.

## Revendications

1. Récipient de cuisson (1) comportant une paroi (4) s'étendant verticalement et une poignée (9) fixée sur ladite paroi (4), ladite poignée (9) comportant une partie de fixation (11) prolongée par une partie de préhension (13, 14), la partie de préhension (13, 14) présentant une forme de boucle ouverte, agencée verticalement par rapport au récipient de cuisson (1) et courbée vers le bas, la poignée (9) s'étendant davantage radialement à la paroi (4) que verticalement, **caractérisé en ce que** la partie de fixation (11) s'étend depuis la partie de préhension en étant courbée vers le haut et en s'étendant le long de la paroi (4).

2. Récipient de cuisson (1) selon la revendication précédente, **caractérisée en ce que** la poignée (9) présente une section sensiblement constante.

3. Récipient de cuisson (1) selon l'une quelconque des revendications 1 à 2, **caractérisé en ce que** la poignée (9) est réalisée en un matériau métallique, notamment un acier inoxydable.

4. Récipient de cuisson (1) selon l'une quelconque des revendications 2 à 3, **caractérisé en ce que** la poignée (9) présente une section de forme semi circulaire.

5. Récipient de cuisson (1) selon l'une quelconque des revendications 2 à 4, **caractérisé en ce que** la poignée (9) présente une section comprenant une largeur I comprise entre 5 et 20 millimètres, de préférences 12 millimètres.

6. Récipient de cuisson (1) selon l'une quelconque des revendications 1 à 5, **caractérisé en ce que** la poignée (9) présente une extension radiale par rapport à la paroi (4) de longueur L et la partie de préhension (13, 14) présente une hauteur H et **en ce que** le rapport entre la hauteur H et la longueur L est compris entre 0,3 et 0,7, de préférence 0, 5.

7. Récipient de cuisson (1) selon l'une quelconque des revendications 1 à 6, **caractérisé en ce que** la partie de préhension comprend une portion courbe (13) qui comporte une face externe présentant un rayon de courbure compris entre 12 et 25 millimètres, de préférence 16 millimètres.

8. Récipient de cuisson (1) selon l'une quelconque des revendications 1 à 7, **caractérisé en ce que** la partie de fixation (11) comporte une surface de fixation (19) agencée contre la paroi (4), ladite surface de fixation (19) étant plane ou présentant un courbure dont le rayon est supérieur à 150 millimètres.

9. Récipient de cuisson (1) selon l'une quelconque des revendications 1 à 8, **caractérisé en ce qu'il** comporte au moins deux poignées (9) agencées côte à côte pour définir un espace (e) permettant la circulation de l'air.

10. Récipient de cuisson selon la revendication 9, **caractérisé en ce que** l'espace (e) au niveau de la partie de fixation (11) est compris entre 1 et 10 millimètres, de préférence 7 millimètres.

## Patentansprüche

1. Kochbehälter (1) mit einer sich senkrecht erstreckenden Wand (4) und einem Griff (9), der an der genannten Wand (4) befestigt ist, wobei der genannte Griff (9) einen Befestigungsteil (11) umfasst, der von einem Greifteil (13, 14) fortgesetzt wird, wobei der Greifteil (13, 14) die Form einer offenen Schleife aufweist, die senkrecht zum Kochbehälter (1) angeordnet und nach unten gekrümmt ist, wobei sich der Griff (9) mehr radial als senkrecht zur Wand (4) erstreckt, **dadurch gekennzeichnet, dass** sich der Befestigungsteil (11) ausgehend von dem Greifteil nach oben gekrümmt und entlang der Wand (4) erstreckt.

2. Kochbehälter (1) nach dem vorhergehenden Anspruch, **dadurch gekennzeichnet, dass** der Griff (9) einen im Wesentlichen gleichbleibenden Querschnitt aufweist.

3. Kochbehälter (1) nach einem der Ansprüche 1 bis 2, **dadurch gekennzeichnet, dass** der Griff (9) aus einem metallischen Werkstoff, insbesondere Edelstahl, hergestellt ist.

4. Kochbehälter (1) nach einem der Ansprüche 2 bis 3, **dadurch gekennzeichnet, dass** der Griff (9) einen halbkreisförmigen Querschnitt aufweist.

5. Kochbehälter (1) nach einem der Ansprüche 2 bis 4, **dadurch gekennzeichnet, dass** der Griff (9) einen Querschnitt mit einer Breite I zwischen 5 und 20mm und vorzugsweise von 12mm aufweist.

6. Kochbehälter (1) nach einem der Ansprüche 1 bis 5, **dadurch gekennzeichnet, dass** der Griff (9) eine radiale Erweiterung zur Wand (4) mit der Länge L darstellt, und der Greifteil (13, 14) eine Höhe H aufweist, und dass das Verhältnis zwischen der Höhe H und der Länge L zwischen 0,3 und 0,7 liegt und vorzugsweise 0,5 beträgt.

7. Kochbehälter (1) nach einem der Ansprüche 1 bis 6, **dadurch gekennzeichnet, dass** der Greifteil einen gekrümmten Anteil (13) aufweist, der eine Außenseite umfasst, die einen Krümmungsradius zwischen 12 und 25mm und vorzugsweise von 16mm aufweist.

8. Kochbehälter (1) nach einem der Ansprüche 1 bis 7, **dadurch gekennzeichnet, dass** der Befestigungsteil (11) eine Befestigungsfläche (19) umfasst, die an der Wand (4) anliegt, wobei die genannte Befestigungsfläche (19) eben ist oder eine Krümmung aufweist, deren Radius mehr als 150mm beträgt.

9. Kochbehälter (1) nach einem der Ansprüche 1 bis 8, **dadurch gekennzeichnet, dass** er zumindest zwei Griffe (9) umfasst, die nebeneinander angeordnet sind und einen Abstand (e) definieren, der die Luftzirkulation gestattet.

10. Kochbehälter nach Anspruch 9, **dadurch gekennzeichnet, dass** der Abstand (e) auf Höhe des Befestigungsteils (11) zwischen 1 und 10mm und vorzugsweise 7mm beträgt.

## Claims

1. Cooking vessel (1) having a wall (4) extending vertically and a handle (9) fixed to the said wall (4), the said handle (9) having an attachment portion (11) extended by a grip portion (13, 14), the grip portion (13, 14) having the shape of an open loop, arranged vertically with respect to the cooking vessel (1) and bent downwards, the handle (9) extending more radially than vertically to the wall (4), **characterized in that** the attachment portion (11) extends from the grip portion being bent upwards and extending along the wall (4).

2. Cooking vessel (1) according to the preceding claim, **characterized in that** the handle (9) has an essentially consistent section.

3. Cooking vessel (1) according to one of the preceding claims, 1 to 2, **characterized in that** the handle (9) is made of a metallic material, specifically stainless steel.

4. Cooking vessel (1) according to one of the preceding claims 2 to 3, **characterised in that** the handle (9) has a semicircular section.

5. Cooking vessel (1) according to one of the preceding claims 2 to 4, **characterised in that** the handle (9) has a section comprising a width I between 5 and 20mm, preferably 12mm.

6. Cooking vessel (1) according to one of the preceding claims 1 to 5, **characterized in that** the handle (9) has a radial extension with respect to the wall (4) of length L and the grip portion (13, 14) has a height H and **in that** the ratio between the height H and length L is between 0.3 and 0.7, preferably 0.5.

7. Cooking vessel (1) according to one of the preceding claims 1 to 6, **characterised in that** the grip portion comprises a curved portion (13) which has an outer face having a radius of curvature of between 12 and 25mm, preferably 16mm.

8. Cooking vessel (1) according to one of the claims 1 to 7, **characterised in that** the attachment portion (11) has an attachment surface (19) arranged against the wall (4), the said attachment surface (19) being flat or having a curvature whose radius is greater than 150mm.

9. Cooking vessel (1) according to one of the claims 1 to 8, **characterized in that** it comprises at least two handles (9) arranged side by side to define a space (e) enabling the circulation of air.

10. Cooking vessel (1) according to claim 9, **characterized in that** the space (e) at the attachment portion (11) is between 1 and 10mm, preferably 7mm.
